(19) Europäisches Patentamt
European Patent Office
Office européen des brevets

(11) **EP 4 645 663 A1**

(12) **EUROPEAN PATENT APPLICATION**
published in accordance with Art. 153(4) EPC

(43) Date of publication:
**05.11.2025 Bulletin 2025/45**

(51) International Patent Classification (IPC):
*H02M 3/155* *(2006.01)*

(21) Application number: **23911521.5**

(52) Cooperative Patent Classification (CPC):
**H02M 3/155**

(22) Date of filing: **29.11.2023**

(86) International application number:
**PCT/JP2023/042760**

(87) International publication number:
**WO 2024/142740 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 JP 2022210645**

(71) Applicant: **DENSO CORPORATION**
**Kariya-city, Aichi 448-8661 (JP)**

(72) Inventors:
• **KUROMATSU, Yutaka**
**Kariya-city, Aichi 448-8661 (JP)**
• **SETO, Junichi**
**Kariya-city, Aichi 448-8661 (JP)**
• **TAKASHIMA, Kaoru**
**Kariya-city, Aichi 448-8661 (JP)**

(74) Representative: **TBK**
**Bavariaring 4-6**
**80336 München (DE)**

(54) **PARALLEL POWER SUPPLY DEVICE AND PROGRAM**

(57) Each of the power conversion devices (30, 130) of a parallel power supply device includes an individual output voltage sensor (42, 142) that detects an individual output voltage value (VHr), a current sensor (40, 140) that detects a control current value (ILr), and a control device (50). A system to which the parallel power supply device is applied includes a common output voltage sensor (44) that detects a common output voltage value (VHext) that is a voltage value between high- and low-potential output paths (12H, 12L). The parallel power supply device is configured so that the detected common output voltage value, an output voltage command value (VH*) common for each of the power conversion devices, and an output power command value (Pext*) common for each of the power conversion devices are inputted into the control device of each of the power conversion devices. The control device of each of the power conversion devices performs a switching control based on the inputted output voltage command value, the individual output voltage value, the control current value, the output power command value and the common output voltage value.

FIG.1

## Description

[CROSS-REFERENCE TO RELATED APPLICATION]

This application is based on Japanese Patent Application No. 2022-210645 filed December 27, 2022, the description of which is incorporated herein by reference.

[Technical Field]

The present disclosure relates to a parallel power supply device and a program.

[Background Art]

A known parallel power supply device of this type includes a plurality of DCDC converters connected in parallel as described in, for example, PTL 1.

[Citation List]

[Patent Literature]

[PTL 1] JP 6323635 B

[Summary of the Invention]

The respective output voltage values of DCDC converters may significantly differ due to some factors. In this case, it is likely that a significant difference among the respective output power values of the DCDC converters, which is a power imbalance, may be generated, causing a disproportionately large load to be placed on some of the DCDC converters.

A main object of the present disclosure is to provide a parallel power supply device and a program capable of reducing a power imbalance.

According to the present disclosure, a parallel power supply device applied to a system is provided, the system including:

a direct-current power supply; and
a supply target unit of an output power from the direct-current power supply,
the parallel power supply device comprising a plurality of power conversion devices, in which
the power conversion devices each include:

a DCDC converter including a switch, a reactor, a high-potential input terminal, a low-potential input terminal, a high-potential output terminal, and a low-potential output terminal, the DCDC converter being configured to transform a direct-current voltage inputted through the high-potential input terminal and the low-potential input terminal and output the transformed voltage through the high-potential output terminal and the low-potential output terminal by repeating an accumulation of a magnetic energy in the reactor and a release of the magnetic energy from the reactor by a switching control of the switch;
an individual output voltage sensor configured to detect an individual output voltage value, the individual output voltage value being a voltage value between the high-potential input terminal and the low-potential input terminal;
a current sensor configured to detect a control current value, the control current value being either a current value flowing through the reactor or a current value flowing to the high-potential output terminal; and
a control device configured to be inputted with the detected individual output voltage value and the control current value,
the system includes:

a high-potential input path that is an electric path connecting a positive terminal of the direct-current power supply and the high-potential input terminal of each of the DCDC converters;
a low-potential input path that is an electric path connecting a negative terminal of the direct-current power supply and the low-potential input terminal of each of the DCDC converters;
a high-potential output path that is an electric path connecting a high-potential terminal of the supply target unit and the high-potential output terminal of each of the DCDC converters;
a low-potential output path that is an electric path connecting a low-potential terminal of the supply target unit and the low-potential output terminal of each of the DCDC converters; and
a common output voltage sensor configured to detect a common output voltage value, the common output voltage value being a voltage value between the high-potential output path and the low-potential output path,
the parallel power supply device is configured so that the detected common output voltage value, an output voltage command value common for each of the power conversion devices, and an output power command value common for each of the power conversion devices are inputted into the control device of each of the power conversion devices, and
the control device of each of the power conversion devices is configured to perform the switching control of the switch based on the inputted output voltage command value, the individual output voltage value, the control current value, the output power command value and the common output voltage value.

In the present disclosure, in order to cause the output power value of the DCDC converter of each of the power conversion devices to become the output power command value common for each of the power conversion devices, the output voltage value of each of the DCDC converters is controlled to be the output voltage command value, which is common for each of the power conversion devices, based on the control current value. Here, the respective output voltage values of the DCDC converters may significantly differ due to some factors.

Here, the common output voltage value detected by the common output voltage sensor is equivalent to an actual voltage value of each of the DCDC converters. The common output voltage value thus serves as a parameter for correcting a variation among the respective output voltage values of the DCDC converters.

In view of the above point, according to the present disclosure, the control device of each of the power conversion devices performs the switching control of the switch of the DCDC converter based on the common output voltage value in addition to the inputted output voltage command value, individual output voltage value, control current value, and output power command value. This makes it possible to reduce a power imbalance.

[Brief Description of the Drawings]

The above and other objects, features, and advantages of the present disclosure will become more apparent from the following detailed description made with reference to the accompanying drawings. The drawings are as follows.

Fig. 1 is an overall configuration diagram of a control system according to a first embodiment.
Fig. 2 is a configuration diagram of each power conversion device constituting the control system.
Fig. 3 is a functional block diagram of a boost control process that is to be performed by an ECU.
Fig. 4 is a functional block diagram of a process that is to be performed by a voltage correction value calculator of the ECU.
Fig. 5 is a functional block diagram of a process that is to be performed by a current correction value calculator of the ECU.
Fig. 6 is a diagram illustrating a deviation of an individual output voltage value relative to a common output voltage value.
Fig. 7 is a diagram illustrating a deviation of a corrected current value relative to a reference current value.

Fig. 8 is a diagram illustrating a relationship between a deviation amount of the corrected current value relative to the reference current value and a deviation amount of the individual output voltage value relative to the common output voltage value.
Fig. 9 is a diagram illustrating a relationship between the deviation amount of the corrected current value relative to the reference current value and the voltage correction value.
Fig. 10 is a diagram illustrating a deviation of a reactor current value relative to the reference current value.
Fig. 11 is a diagram illustrating a deviation of the corrected output voltage value relative to the common output voltage value.
Fig. 12 is a diagram illustrating a relationship between a deviation amount of the corrected output voltage value relative to the common output voltage value and a deviation amount of the reactor current value relative to the reference current value.
Fig. 13 is a diagram illustrating a relationship between the deviation amount of the corrected output voltage value relative to the common output voltage value and a current correction value.
Fig. 14 is a flowchart illustrating a sequence of a boost control process.
Fig. 15 is a flowchart illustrating a sequence of a process of the voltage correction value calculator.
Fig. 16 is a flowchart illustrating a sequence of a process of the current correction value calculator.
Fig. 17 is a diagram illustrating an implementation of correction of a detected individual output voltage value.
Fig. 18 is a diagram illustrating an implementation of correction of a detected reactor current value.
Fig. 19 is a functional block diagram of a process that is to be performed by a voltage correction value calculator according to a second embodiment.
Fig. 20 is a functional block diagram of a process that is to be performed by a current correction value calculator.
Fig. 21 is a functional block diagram of a process that is to be performed by a voltage correction value calculator according to a third embodiment.
Fig. 22 is a diagram illustrating an example of a method of determining permission and restriction of a correction process by the voltage correction value calculator.
Fig. 23 is a functional block diagram of the process that is to be performed by the voltage correction value calculator.
Fig. 24 is a diagram illustrating an example of a method of determining permission and restriction of a correction process by the current correction value calculator.
Fig. 25 is a diagram illustrating an example of a method of determining permission and restriction of the correction process by the current correction value calculator according to a modification example of the third embodiment.

Fig. 26 is a configuration diagram of each power conversion device constituting a control system according to a fourth embodiment.

Fig. 27 is a functional block diagram of a boost control process that is to be performed by an ECU.

Fig. 28 is a functional block diagram of a process that is to be performed by a voltage correction value calculator.

Fig. 29 is a configuration diagram of each power conversion device constituting a control system according to a fifth embodiment.

[Description of Embodiments]

Description will be given of a plurality of embodiments with reference to the drawings. In the plurality of embodiments, functionally and/or structurally corresponding or associated units may be designated by the same reference sign or reference signs that differ by multiples of one hundred. For corresponding and/or associated units, reference may be made to the description of other embodiments.

<First Embodiment>

Description will be given below of a first embodiment exemplifying a parallel power supply device according to the present disclosure with reference to the drawings. A control system including the parallel power supply device is installed to a vehicle such as an electric vehicle. However, a moving body as an installation object for the control system is not limited to a vehicle and may be, for example, an aircraft, a ship, or a railway vehicle. The installation object for the control system may also be a robot (for example, an industrial robot), a generator, an elevator, a stationary emergency power supply, or a stationary charger.

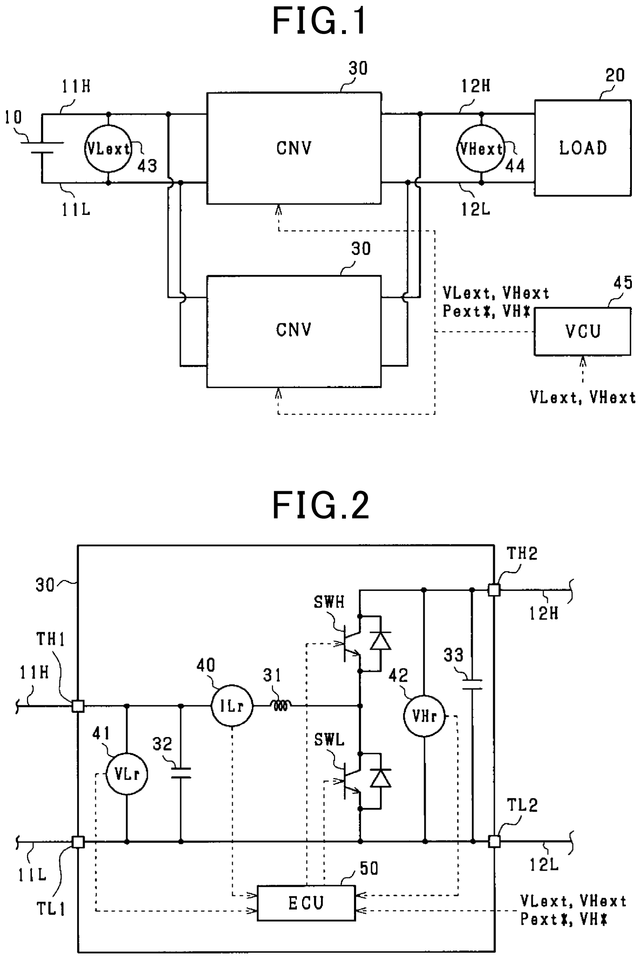

As illustrated in Fig. 1, the control system includes a direct-current power supply 10, an electrical load 20 (corresponding to "a supply target unit"), a plurality of power conversion devices 30 that perform power transfer between the direct-current power supply 10 and the electrical load 20. In the present embodiment, the description is given using a case where there are two power conversion devices 30 as an example. The direct-current power supply 10 may be, for example, a secondary battery capable of charge and discharge. The electrical load 20 may include, for example, an inverter and a rotating electrical machine. It should be noted that, for example, a secondary battery capable of charge and discharge may be provided in place of the electrical load 20.

In the present embodiment, each of the power conversion devices 30 has the same configuration. The power conversion device 30 includes a boost-chopper DCDC converter as illustrated in Fig. 2. The DCDC converter includes a reactor 31, upper and lower arm switches SWH, SWL, a first capacitor 32, and a second capacitor 33. Each of the switches SWH, SWL of the present embodiment is an IGBT. A freewheeling diode is connected in inverse parallel to each of the switches SWH, SWL.

A first end of the reactor 31 is connected to a first end of the first capacitor 32 and a first high-potential terminal TH1 (corresponding to "a high-potential input terminal") of the power conversion device 30. A second end of the first capacitor 32 is connected to a first low-potential terminal TL1 (corresponding to "a low-potential input terminal") of the power conversion device 30. A second end of the reactor 31 is connected to an emitter, which is a low-potential terminal of the upper arm switch SWH, and a collector, which is a high-potential terminal of the lower arm switch SWL.

A collector of the upper arm switch SWH is connected to a first end of the second capacitor 33 and a second high-potential terminal TH2 (corresponding to "a high-potential output terminal") of the power conversion device 30. A second end of the second capacitor 33 is connected to a second low-potential terminal TL2 (corresponding to "a low-potential output terminal") of the power conversion device 30. An emitter of the lower arm switch SWL is connected to the second low-potential terminal TL2 and the first low-potential terminal TL1.

The power conversion device 30 includes a current sensor 40, a first voltage sensor 41 (corresponding to "an individual input voltage sensor"), a second voltage sensor 42 ("an individual output voltage sensor"), and an ECU 50 serving as a control device. The current sensor 40 detects a current flowing through the reactor 31. The first voltage sensor 41 detects a terminal voltage of the first capacitor 32 and the second voltage sensor 42 detects a terminal voltage of the second capacitor 33. The respective detection values of the sensors 40 to 42 are to be inputted into the ECU 50.

The control system includes, as electric paths for connecting the direct-current power supply 10 and each of the power conversion devices 30, a first high-potential path 11H (corresponding to "a high-potential input path") and a first low-potential path 11L (corresponding to "a low-potential input path"). The first high-potential path 11H connects a positive terminal of the direct-current power supply 10 and the first high-potential terminal TH1 of the power conversion device 30. The first low-potential path 11L connects a negative terminal of the direct-current power supply 10 and the first low-potential terminal TL1 of each of the power conversion devices 30.

The control system includes, as electric paths for connecting each of the power conversion devices 30 and the electrical load 20, a second high-potential path 12H (corresponding to "a high-potential output path") and a second low-potential path 12L (corresponding to "a low-potential output path"). The second high-potential path 12H connects the second high-potential terminal TH2 of each of the power conversion devices 30 and a high-potential terminal of the electrical load 20. The second low-potential path 12L connects the second low-potential terminal TL2 of each of the power conversion devices 30 and a low-potential terminal of the electrical load 20.

The first high-potential terminal TH1 of each of the power conversion devices 30 is connected through the first high-potential path 11H and the first low-potential terminal TL1 of each of the power conversion devices 30 is connected through the first low-potential path 11L. Moreover, the second high-potential terminal TH2 of each of the power conversion devices 30 is connected through the second high-potential path 12H and the second low-potential terminal TL2 of each of the power conversion devices 30 is connected through the second low-potential path 12L. The respective DCDC converters of the power conversion devices 30 are thus connected in parallel.

The control system includes a first common voltage sensor 43 (corresponding to "a common input voltage sensor"), a second common voltage sensor 44 (corresponding to "a common output voltage sensor"), and a VCU 45, which is a higher-level control device of the ECU 50. The first common voltage sensor 43 detects a voltage between the first high-potential path 11H and the first low-potential path 11L. The second common voltage sensor 44 detects a voltage between the second high-potential path 12H and the second low-potential path 12L. In the present embodiment, the respective detection values of the common voltage sensors 43, 44 are to be inputted not into the ECU 50 of each of the power conversion devices 30 but into the VCU 45.

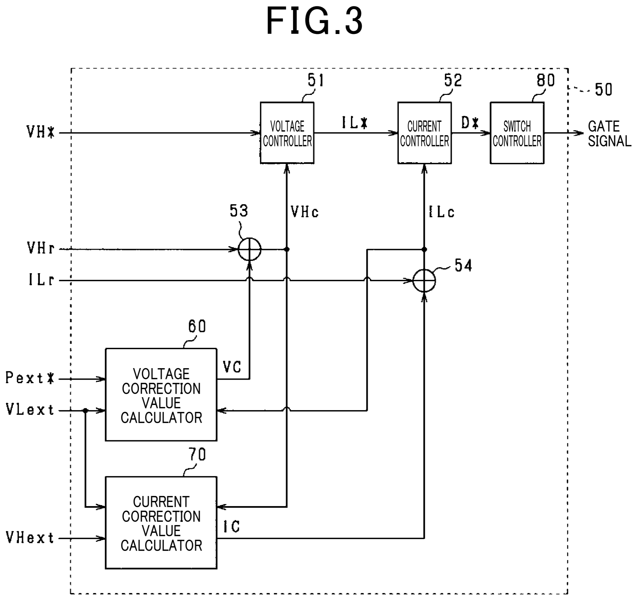

The VCU 45 and the ECU 50 of each of the power conversion devices 30 consist mainly of a microcomputer and the microcomputer includes a CPU. A function provided by the microcomputer may be provided by software recorded in a tangible memory device and a computer that executes the software, software only, hardware only, or a combination thereof. For example, in a case where the microcomputer is provided by an electronic circuit, which is hardware, the microcomputer may be provided by a digital circuit including a large number of logic circuits or an analog circuit. For example, the microcomputer executes a program stored in a non-transitory tangible storage medium that is an own storage of the microcomputer. The program includes, for example, programs of processes illustrated in Figs. 3 to 5, 16, and the like described later. As a program installed in the VCU 45 and the ECU 50 is executed, a method corresponding to the program is performed. The storage is, for example, a non-volatile memory. It should be noted that the program stored in the storage may be downloaded and updated via a communication network such as the Internet such as OTA (Over The Air).

The VCU 45 acquires a common input voltage value VLext, which is a voltage value detected by the first common voltage sensor 43, and a common output voltage value VHext, which is a voltage value detected by the second common voltage sensor 44. The VCU 45 sends the acquired common input voltage value VLext and the common output voltage value VHext to the ECU 50 of each of the power conversion devices 30. In the present embodiment, the common input voltage value VLext to be sent to each ECU 50 is a common value and the common output voltage value VHext to be sent to each ECU 50 is a common value.

The VCU 45 sends an output power command value Pext* and an output voltage command value VH* to the ECU 50 of each of the power conversion devices 30. In the present embodiment, the output voltage command value VH to be sent to each ECU 50 is a common value.

The output power command value Pext* is a command value of an output power of the DCDC converter of the power conversion device 30. The VCU 45 calculates, as output power command value Pext* (= Ptotal/Ncv), a value obtained by equally dividing a total power command value Ptotal, which is to be supplied from the direct-current power supply 10 to the electrical load 20, by the number Ncv of the power conversion devices 30. The output power command value Pext* to be sent to each ECU 50 thus becomes a common value.

In each of the power conversion devices 30, the ECU 50 receives the common input voltage value VLext, the common output voltage value VHext, the output power command value Pext*, and the output voltage command value VH* sent from the VCU 45. In each of the power conversion devices 30, a reactor current value ILr (corresponding to "a control current value"), which is a current value detected by the current sensor 40, an individual input voltage value VLr, which is a voltage value detected by the first voltage sensor 41, and an individual output voltage value VHr, which is a voltage value detected by the second voltage sensor 42, are to be inputted into the ECU 50. In each of the power conversion devices 30, the ECU 50 performs a boost control to increase the output voltage value of the DCDC converter to the output voltage command value VH*.

Fig. 3 is a functional block diagram of the boost control to be individually performed by the ECU 50 of each of the power conversion devices 30.

A voltage controller 51 calculates a reactor current command value IL* as an operation amount for feedback-controlling a corrected output voltage value VHc, which is outputted from a later-described voltage adder 53, to the output voltage command value VH* and the reactor current command value IL* is a current command value to flow through the reactor 31. The feedback control used by the voltage controller 51 may be, for example, a proportional-integral control.

A current controller 52 calculates a duty ratio D* as an operation amount for feedback-controlling a corrected current value ILc, which is outputted from a later-described current adder 54, to a reactor command current value IL*. The feedback control used by the current controller 52 is, for example, a proportional-integral control. The duty ratio D* is a ratio (Ton/Tsw) of an ON period Ton to one switching cycle Tsw of the lower arm switch SWL.

A switch controller 80 generates a gate signal of the lower arm switch SWL based on the calculated duty ratio D*. The switch controller 80 performs a switching control of the lower arm switch SWL by outputting the gate signal to the lower arm switch SWL. It should be noted that during the boost control, the switch controller 80 may keep the upper arm switch SWH off or may alternately turn on the upper and lower arm switches SWH, SWL.

Incidentally, the individual output voltage value VHr contains a voltage error that is a deviation from an actual output voltage value of the DCDC converter. The voltage error may contain a gain error and an offset error contained in the detection value of the second voltage sensor 42, a disturbance noise, and an error attributed to a deviation of a detection timing of the second voltage sensor 42 of each of the power conversion devices 30. Moreover, the reactor current value ILr contains a current error that is a deviation from an actual current value flowing through the reactor 31. The current error may contain a gain error and an offset error contained in the detection value of the current sensor 40, a disturbance noise, and an error attributed to a deviation of a detection timing of the current sensor 40 of each of the power conversion devices 30.

Using a case where a voltage error is contained as an example, an adverse influence of the voltage error on the boost control will be described. It is assumed that out of the two power conversion devices 30, the power conversion device 30 in which the individual output voltage value VHr contains a first voltage error making that individual output voltage value VHr higher than the actual output voltage value is referred to as a first power conversion device, and the power conversion device 30 in which the individual output voltage value VHr contains a second voltage error making that individual output voltage value VHr lower than the actual output voltage value is referred to as a second power conversion device. The ECU 50 of the first power conversion device performs the boost control in which the individual output voltage value VHr containing the first voltage error is feedback-controlled to the output voltage command value VH*, whereas the ECU 50 of the second power conversion device performs the boost control in which the individual output voltage value VHr containing the second voltage error is feedback-controlled to the output voltage command value VH*.

In this case, the reactor current command value IL* becomes relatively small in the first power conversion device, whereas the reactor current command value IL* becomes relatively large in the second power conversion device. As a result, a power imbalance occurs, where the actual output voltage value of the first power conversion device becomes lower than the actual output voltage value of the second power conversion device, and the output power value of the second power conversion device becomes larger than the output power value of the first power conversion device. In this case, the second power conversion device becomes overheated, which may lead to a decrease in reliability of the second power conversion device.

Accordingly, each ECU 50 of the present embodiment includes a voltage correction value calculator 60, a current correction value calculator 70, the voltage adder 53, and the current adder 54 as illustrated in Fig. 3. The voltage correction value calculator 60 and the voltage adder 53 correspond to "a voltage corrector" and the current correction value calculator 70 and the current adder 54 correspond to "a current corrector."

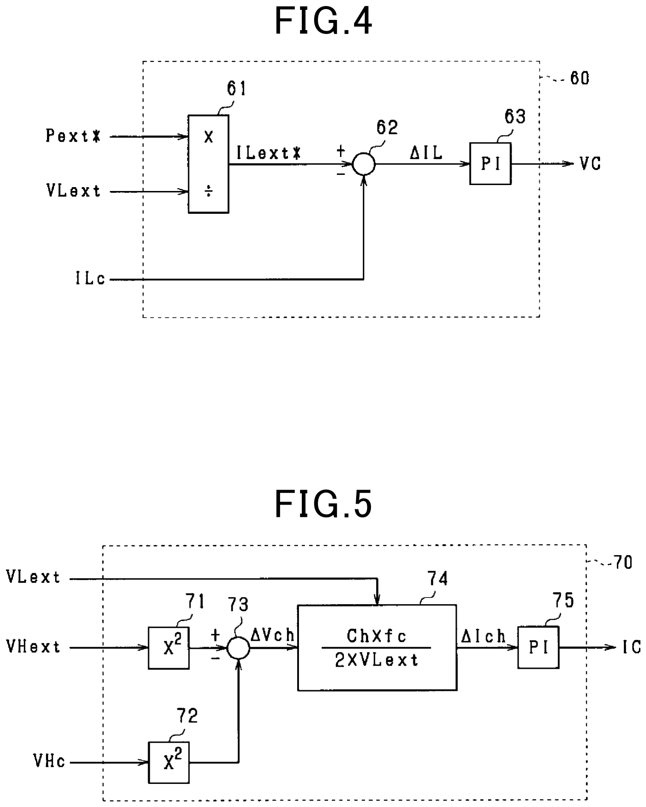

The voltage correction value calculator 60 includes a reference current calculator 61, a current deviation calculator 62, and a first feedback controller 63 as illustrated in Fig. 4. The reference current calculator 61 calculates a reference current value ILext* (= Pext*/VLext) by dividing the output power command value Pext* by the common input voltage value VLext.

The current deviation calculator 62 calculates a current deviation value $\Delta$IL (= ILext* - ILc) by subtracting, from the reference current value ILext*, the corrected current value ILc outputted from the current adder 54.

The first feedback controller 63 calculates a voltage correction value VC as an operation amount for feedback-controlling the current deviation value $\Delta$IL to zero. The feedback control used by the first feedback controller 63 may be, for example, a proportional-integral control.

Reference back to the illustration in Fig. 3, the voltage correction value VC outputted from the voltage correction value calculator 60 is to inputted into the voltage adder 53. The voltage adder 53 calculates the corrected output voltage value VHc (= VHr + VC) by adding the voltage correction value VC to the individual output voltage value VHr.

The current correction value calculator 70 includes a first calculator 71, a second calculator 72, a voltage deviation calculator 73, an overcurrent/undercurrent calculator 74, and a second feedback controller 75 as illustrated in Fig. 5. The first calculator 71 calculates the square of the common output voltage value VHext, and the second calculator 72 calculates the square of the corrected output voltage value VHc.

The voltage deviation calculator 73 calculates a voltage deviation value $\Delta$Vch by subtracting the square of the corrected output voltage value VHc from the square of the common output voltage value VHext.

The overcurrent/undercurrent calculator 74 calculates an overcurrent/undercurrent deviation value $\Delta$Ich represented by the following expression (eq1) based on the common input voltage value VLext and the voltage deviation value $\Delta$Vch. In the following expression (eq1), Ch denotes a capacitance of the second capacitor 33 and fc denotes a switching frequency (= 1/Tsw) of the upper and lower arm switches SWH, SWL.

[Math. 1]

$$\Delta I_{ch} = \frac{C_h \times f_c}{2 \times VL_{ext}} \times \Delta V_{ch} \cdot \cdot \cdot (eq1)$$

The overcurrent/undercurrent current deviation value ΔIch indicates deficiency and excess of a current value that should flow through the second capacitor 33 in order to set the terminal voltage of the second capacitor 33 to the common output voltage value VHext and is a correlation value of a difference between the common output voltage value VHext and the individual output voltage value VHr.

The second feedback controller 75 calculates a current correction value IC as an operation amount for feedback-controlling the overcurrent/undercurrent current deviation value ΔIch to zero. The feedback control used by the second feedback controller 75 is, for example, a proportional-integral control.

Referring back to the illustration in Fig. 3, the current correction value IC outputted from the current correction value calculator 70 is to be inputted into the current adder 54. The current adder 54 calculates the corrected current value ILc (= ILr + IC) by adding the current correction value IC to the reactor current value ILr.

Description will be given of a reason why the above-described calculation of the corrected output voltage value VHc and the corrected current value ILc enables a reduction in the power imbalance.

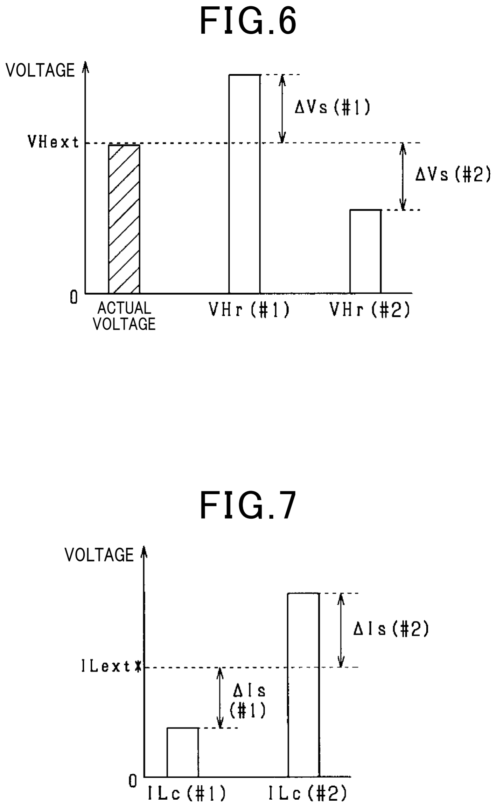

If the individual output voltage value VHr used for the boost control is different between the power conversion devices 30 due to an influence of a voltage error under a situation where the respective actual output voltage values of the power conversion devices 30 are equal, a power imbalance (i.e., an imbalance of the current values flowing through the reactors 31) occurs between the power conversion devices 30 as illustrated in Fig. 6. ΔVs shown in Fig. 6 denotes a deviation amount between the common output voltage value VHext and the individual output voltage value VHr.

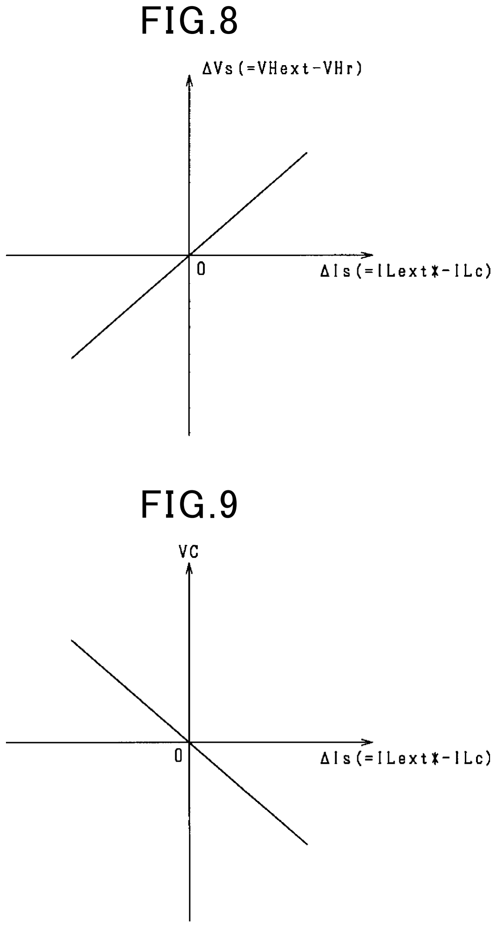

Meanwhile, an influence of a difference in the individual output voltage value VHr between the power conversion devices 30 appears as a deviation amount ΔIs (= ILext* - ILc) between the corrected current value ILc and the reference current value ILext* as illustrated in Fig. 7. Here, it has been found that a relationship between a deviation amount ΔVs between the common output voltage value VHext and the individual output voltage value VHr and the deviation amount ΔIs between the corrected current value ILc and the reference current value ILext* is positively correlated (specifically, in a monotonically increasing relationship) as illustrated in Fig. 8. Accordingly, it is basically possible to reduce the power imbalance by correcting the individual output voltage value VHr based on the relationship between ΔIs and the voltage correction value VC illustrated in Fig. 9. In detail, in the voltage correction value calculator 60, the voltage correction value VC that causes a deviation between the reference current value ILext* and the reactor current value ILr to be close to zero is calculated and the individual output voltage value VHr is corrected using the calculated latest voltage correction value VC, which makes it possible to reduce the power imbalance.

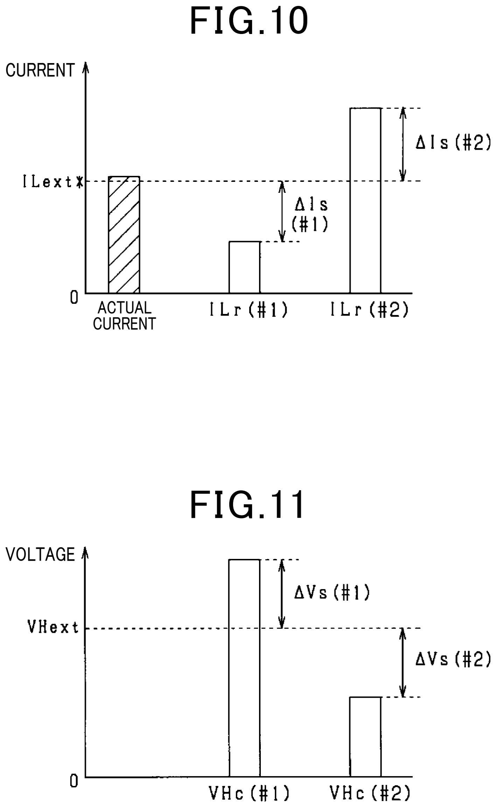

Actually, since a current error also occurs in addition to the voltage error, the reactor current value ILr, which is the detection value of the current sensor 40, differs due to an influence of the current error as illustrated in Fig. 10. ΔIs shown in Fig. 10 denotes a deviation amount between the reference current value ILext and the reactor current value ILr. Therefore, there is a concern that the above-described correction process based on the voltage correction value VC is not sufficient to properly reduce the power imbalance.

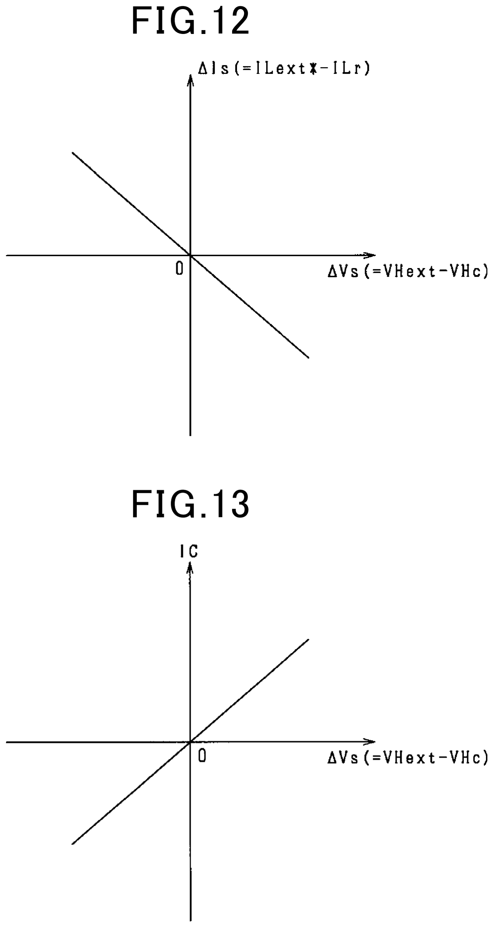

Meanwhile, an influence of the difference in the reactor current value ILr between the power conversion devices 30 appears as the deviation amount ΔVs (= VHext - VHc) between the corrected output voltage value VHc and the common output voltage value VHext as illustrated in Fig. 11. Here, it has been found that a relationship between the deviation amount ΔIs between the reference current value ILext* and the reactor current value ILr and the deviation amount ΔVs between the corrected output voltage value VHc and the common output voltage value VHext is negatively correlated (specifically, in a monotonically decreasing relationship) as illustrated in Fig. 12. Accordingly, it is basically possible to reduce the power imbalance by correcting the reactor current value ILr based on the relationship between ΔVs and the current correction value IC illustrated in Fig. 13. In detail, in the current correction value calculator 70, the current correction value IC that causes the overcurrent/undercurrent current deviation value ΔIch to be close to zero is calculated and the reactor current value ILr is corrected using the calculated latest current correction value IC, which makes it possible to properly reduce the power imbalance.

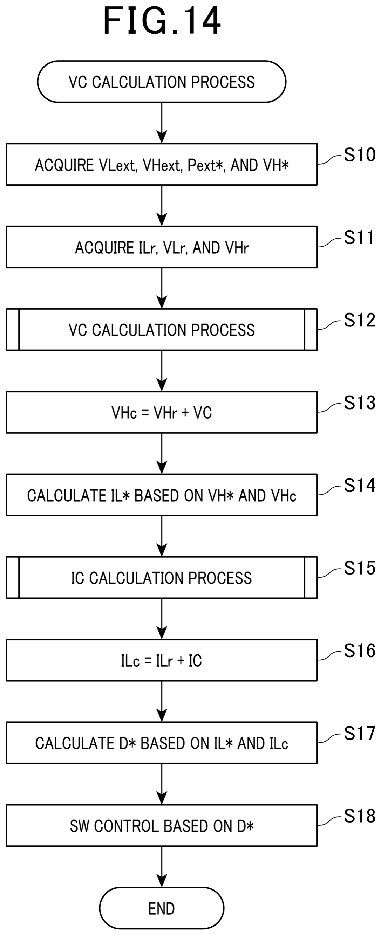

Fig. 14 is a flowchart of the boost control that is to be performed by each ECU 50. The boost control process is to be repeatedly performed by the ECU 50, for example, on a predetermined control cycle.

In Step S10, the common input voltage value VLext, the common output voltage value VHext, the output power command value Pext*, and the output voltage command value VH* are acquired.

In Step S11, the reactor current value ILr, the individual input voltage value VLr, and the individual output voltage value VHr are acquired.

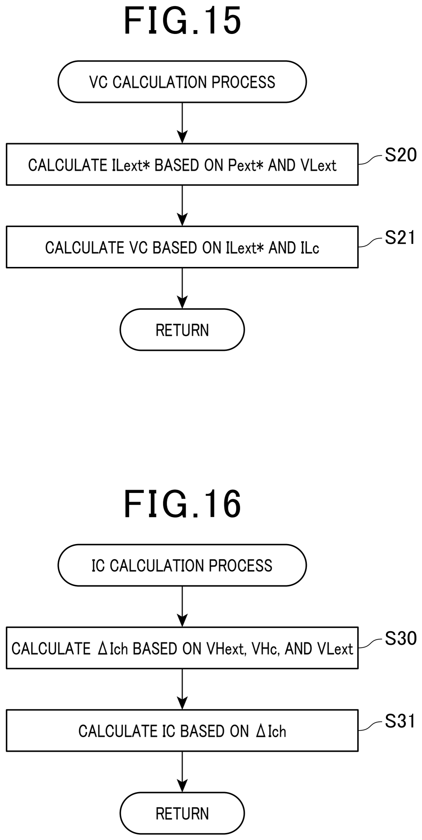

In Step S12, the voltage correction value calculator 60 performs a calculation process of the voltage correction value VC. In detail, in Step S20 in Fig. 15, the reference current calculator 61 calculates the reference current value ILext* based on the acquired output power command value Pext* and common input voltage value VLext. In Step S21, the current deviation calculator 62 calculates the current deviation value ΔIL by calculating the latest corrected current value ILc from the reference current value ILext*. Then, the first feedback controller 63 calculates the current correction value IC based on the current deviation value ∆IL.

Referring back to the illustration in Fig. 14, in Step S13, the voltage adder 53 calculates the corrected output voltage value VHc by adding the calculated latest voltage correction value VC to the acquired individual output voltage value VHr. In Step S14, the voltage controller 51 calculates the reactor current command value IL* based on the corrected output voltage value VHc and the output voltage command value VH*.

In Step S15, the current correction value calculator 70 performs a calculation process of the current correction value IC. In detail, in Step S30 in Fig. 16, the first calculator 71, the second calculator 72, the voltage deviation calculator 73, and the overcurrent/undercurrent calculator 74 calculate the overcurrent/undercurrent current deviation value ∆Ich based on the common output voltage value VHext, the latest corrected output voltage value VHc calculated in Step S13, and the common input voltage value VLext. In Step S31, the second feedback controller 75 calculates the current correction value IC based on the overcurrent/undercurrent current deviation value ∆Ich.

Referring back to the illustration in Fig. 14, in Step S16, the current adder 54 calculates the corrected current value ILc by adding the calculated latest current correction value IC to the acquired reactor current value ILr.

In Step S17, the current controller 52 calculates the duty ratio D* based on the corrected current value ILc and the reactor current command value IL*. In Step S18, the switch controller 80 performs the switching control of the lower arm switch SWL based on the duty ratio D*.

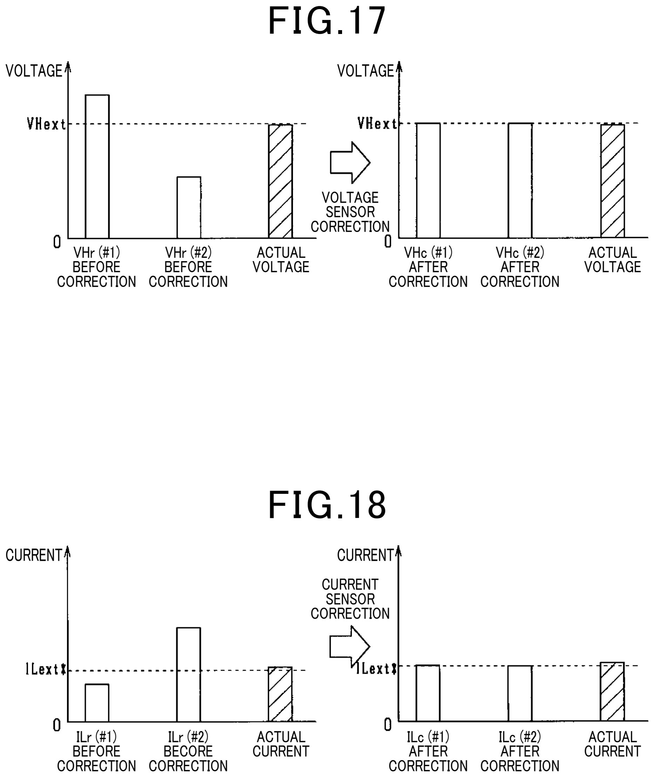

The present embodiment described hereinabove makes it possible to reduce a variation in the output voltage value used for the boost control as illustrated in Fig. 17 and reduce a variation in the reactor current value used for the boost control as illustrated in Fig. 18. This makes it possible to properly reduce the power imbalance.

<Modification Examples of First Embodiment>

- The voltage correction value calculator 60 illustrated in Fig. 4 may include a voltage correction value restrictor that restricts the voltage correction value VC, which is calculated by the first feedback controller 63, to upper and lower limits thereof. Moreover, the first feedback controller 63 may restrict an integral term calculated based on the current deviation value ∆IL to upper and lower limits thereof in a case where a proportional-integral control is used as the feedback control.
- The current correction value calculator 70 illustrated in Fig. 5 may include a current correction value restrictor that restricts the current correction value IC, which is calculated by the second feedback controller 75, to upper and lower limits thereof. Moreover, the second feedback controller 75 may restrict an integral term calculated based on the overcurrent/undercurrent current deviation value ∆Ich to upper and lower limits thereof in a case where a proportional-integral control is used as the feedback control.

- The current correction value calculator 70 may calculate the voltage deviation value ∆Vch (= VHext - VHc) by subtracting the corrected output voltage value VHc from the common output voltage value VHext. In this case, for example, the overcurrent/undercurrent calculator 74 may change a coefficient by which the voltage deviation value ∆Vch is to be multiplied.

<Second Embodiment>

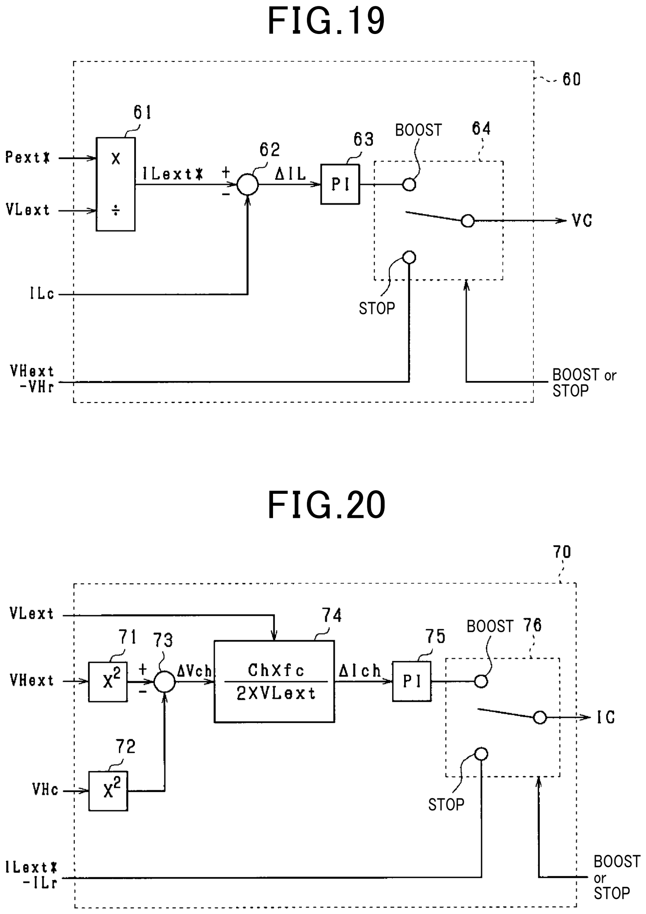

Hereinbelow, a second embodiment will be described with reference to the drawings with a focus on a difference from the first embodiment. In the present embodiment, the common output voltage value VHext and the individual output voltage value VHr are to be inputted into the voltage correction value calculator 60 of each ECU 50. In response to the determination that the boost control is stopped as the switching control is stopped as illustrated in Fig. 19, the voltage correction value calculator 60 of each ECU 50 operates the voltage switcher 64 so that "VHext - VHr" is outputted as the voltage correction value VC to the voltage adder 53. In this case, the voltage adder 53 outputs, as the corrected output voltage value VHc, the common output voltage value VHext to the voltage controller 51 by the calculation of "VHr + (VHext - VHr)."

In contrast, in response to the determination that the boost control is ongoing, the voltage correction value calculator 60 of each ECU 50 operates the voltage switcher 64 so that the voltage correction value VC, which is calculated by the first feedback controller 63, is outputted to the voltage adder 53.

The above-described process of the voltage correction value calculator 60 causes the output voltage value used by the voltage controller 51 in a transient state immediately after the start of the boost control to become the common output voltage value VHext. The output voltage value used by each ECU 50 thus becomes the same value (the common output voltage value VHext), which makes it possible to reduce the power imbalance in the transient state immediately after the start of the boost control.

In the present embodiment, the reference current value ILext* and the reactor current value ILr are to be inputted into the current correction value calculator 70 of each ECU 50. In response to the determination that the boost control is stopped as illustrated in Fig. 20, the current correction value calculator 70 of each ECU 50 operates the current switcher 64 so that "ILext* - ILr" is outputted as the current correction value IC to the current adder 54. The reference current value ILext* in this case is the latest value. The current adder 54 outputs, as the corrected current value ILc, the reference current value ILext* to the current controller 52 by the calculation of "ILr + (ILext* - ILr)."

In contrast, in response to the determination that the boost control is ongoing, the current correction value calculator 70 of each ECU 50 operates the current switcher 76 so that the current correction value IC, which is calculated by the second feedback controller 75, is outputted to the current adder 54.

The above-described process of the current correction value calculator 70 causes the current value used by the current controller 52 in the transient state immediately after the start of the boost control to become the reference current value ILext*. The current value used by each ECU 50 thus becomes the same value (the reference current value ILext*), which makes it possible to reduce the power imbalance in the transient state immediately after the start of the boost control.

<Third Embodiment>

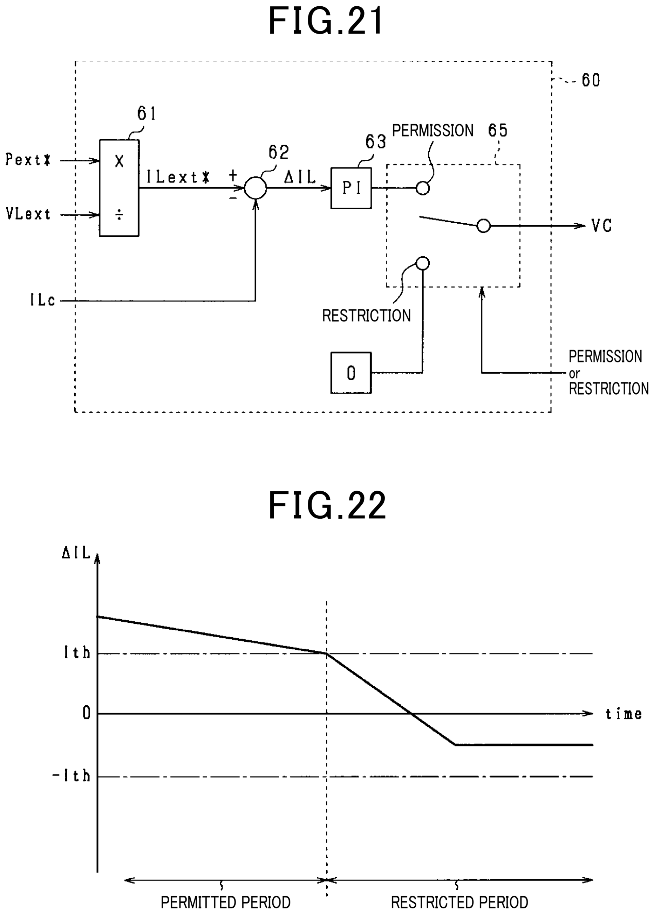

Hereinbelow, a third embodiment will be described with reference to the drawings with a focus on a difference from the second embodiment. In the present embodiment, in response to the determination that that the correction process of the individual output voltage value VHr is restricted, the voltage correction value calculator 60 of each ECU 50 operates the voltage switcher 65 so that "0" is outputted as the voltage correction value VC to the voltage adder 53 as illustrated in Fig. 21. In this case, the voltage adder 53 does not correct the individual output voltage value VHr. The voltage controller 51 thus calculates, as an operation amount for feedback-controlling the inputted individual output voltage value VHr to the output voltage command value VH*, the reactor current command value IL*.

In contrast, in response to the determination that the correction process is permitted, the voltage correction value calculator 60 of each ECU 50 operates the voltage switcher 65 so that the calculated voltage correction value VC, which is calculated by the first feedback controller 63, is outputted to the voltage adder 53.

This allows the correction process to be stopped in a case where the correction of the individual output voltage value VHr is not required, or the like, thereby reducing a computational burden on the ECU 50.

Here, description will be given of an example of a method of determining the restriction and permission of the correction process with use of Fig. 22. In response to the determination that a magnitude of the current deviation value ∆IL calculated by the current deviation calculator 62 exceeds a current threshold Ith, the voltage correction value calculator 60 determines that the correction process of the individual output voltage value VHr is to be permitted. In contrast, in response to the determination that the magnitude of the current deviation value ∆IL is equal to or less than the current threshold Ith, the voltage correction value calculator 60 determines that the correction relative to the individual output voltage value VHr is to be restricted.

The determining method allows a variation in the output voltage value of the DCDC converter attributed to the correction process to be reduced, thereby stabilizing the output voltage value of the DCDC converter.

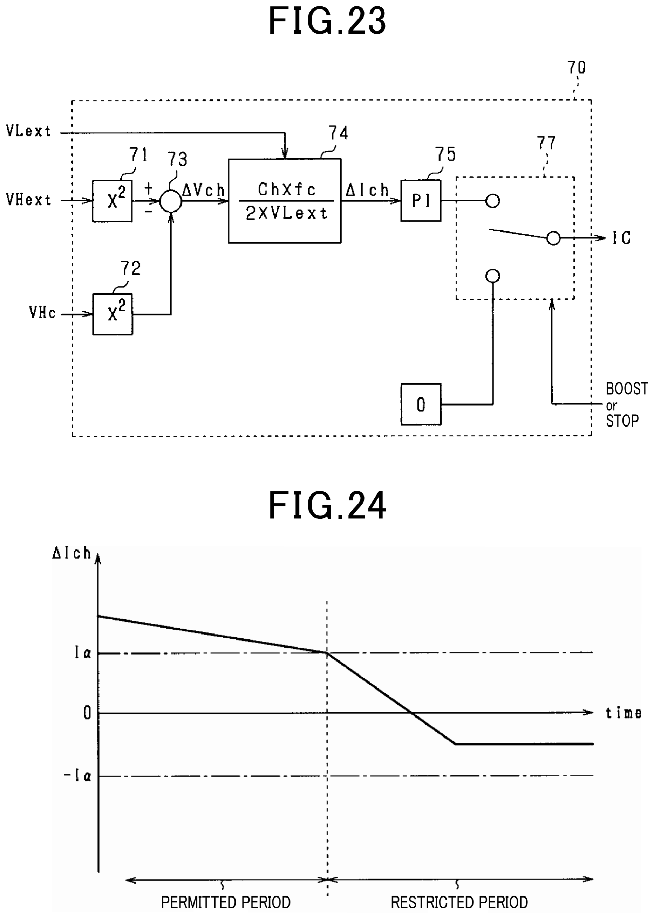

In response to the determination that the correction process of the reactor current value ILr is restricted as illustrated in Fig. 23, the current correction value calculator 70 of each ECU 50 operates a current switcher 77 so that "0" is outputted as the current correction value IC to the current adder 54. In this case, the reactor current value ILr is outputted from the current adder 54 to the current controller 52. The current controller 52 thus calculates the duty ratio D* as an operation amount for feedback-controlling the inputted reactor current value ILr to the reactor current command value IL*.

In contrast, in response to the determination that the correction process is permitted, the current correction value calculator 70 of each ECU 50 operates the current switcher 77 so that the calculated current correction value IC, which is calculated by the second feedback controller 75, is outputted to the current adder 54.

This allows the correction process to be stopped in a case where the correction of the reactor current value ILr is not required, or the like, thereby reducing a computational burden on the ECU 50.

Here, description will be given of an example of a method of determining the restriction and permission of the correction process with use of Fig. 24. In response to the determination that a magnitude of the overcurrent/undercurrent current deviation value ∆Ich calculated by the overcurrent/undercurrent calculator 74 exceeds a threshold Iα, the current correction value calculator 70 determines that the correction process of the reactor current value ILr is to be permitted. In contrast, in response to the magnitude of the overcurrent/undercurrent current deviation value ∆Ich is equal to or less than the threshold Iα, the current correction value calculator 70 determines that the correction process is to be restricted.

The determining method allows a variation in the output voltage value of the DCDC converter attributed to the correction process to be reduced, thereby stabilizing the output voltage value of the DCDC converter.

<Modification Examples of Third Embodiment >

- The method of determining the restriction and permission of the correction process of the reactor current value ILr is not limited to the method illustrated in Fig. 24 and may be a determining method described below.

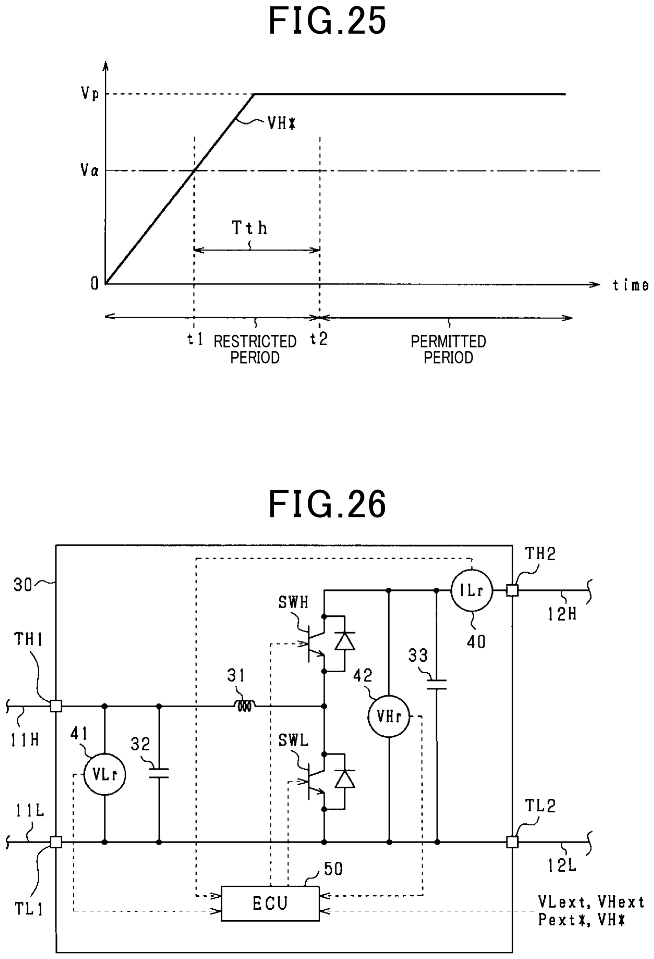

After the start of the boost control of each of the power conversion devices 30, the output voltage command value VH* sent from the VCU 45 to each ECU 50 gradually increases from zero toward a specified voltage Vp as illustrated in Fig. 25. In an example illustrated in Fig. 25, the output voltage command value VH* rises at a constant rate. After the inputted output voltage command value VH* starts to gradually increase, the current correction value calculator 70 of each ECU 50 permits the correction process in response to determining that a predetermined time Tth has elapsed since a timing t1 when the output voltage command value VH* reaches a determination voltage $V\alpha$ (< Vp). In contrast, in response to determining that the predetermined time Tth has not elapsed since the above-described timing t1, the current correction value calculator 70 restricts the correction process. t2 in Fig. 25 indicates a timing when the predetermined time Tth elapses since the timing t1. The predetermined time Tth may be set at, for example, a value allowing for determining that the individual output voltage value VHr of each DCDC converter converges to the specified voltage Vp.

In the transient state of the output voltage command value VH* immediately after the start of the boost control, the actual output voltage value of each DCDC converter may significantly vary. In this case, for example, a variation in a voltage error in each ECU 50 becomes large due to a deviation of a detection timing of the individual output voltage value VHr in each ECU 50, so that the reactor current value ILr may be excessively corrected. As a result, the power imbalance is likely to become large. In this regard, the determining method illustrated in Fig. 25 allows the correction process to be started after a situation in which a large power imbalance is likely to become large is avoided, thereby favorably reducing the occurrence of the power imbalance.

- The voltage correction value calculator 60 and the current correction value calculator 70 may permit the correction process, for example, in a case where a torque of a rotating electrical machine included in the electrical load 20 is in a steady state and may restrict the correction process during the transient state in which the torque of the rotating electrical machine changes rapidly.

<Fourth Embodiment>

Hereinbelow, a fourth embodiment will be described with reference to the drawings with a focus on a difference from the first embodiment. In the present embodiment, an installation position of the current sensor 40 in each of the power conversion devices 30 is changed as illustrated in Fig. 26. In detail, the current sensor 40 is provided in the power conversion device 30 so as to detect a current value flowing through the second high-potential terminal TH2.

The voltage controller 51 calculates, as an operation amount for feedback-controlling the corrected output voltage value VHc to the output voltage command value VH*, the current command value IL* flowing to the second high-potential terminal TH2. The current controller 52 calculates the duty ratio D* as an operation amount for feedback-controlling the corrected current value ILc to the current command value IL*.

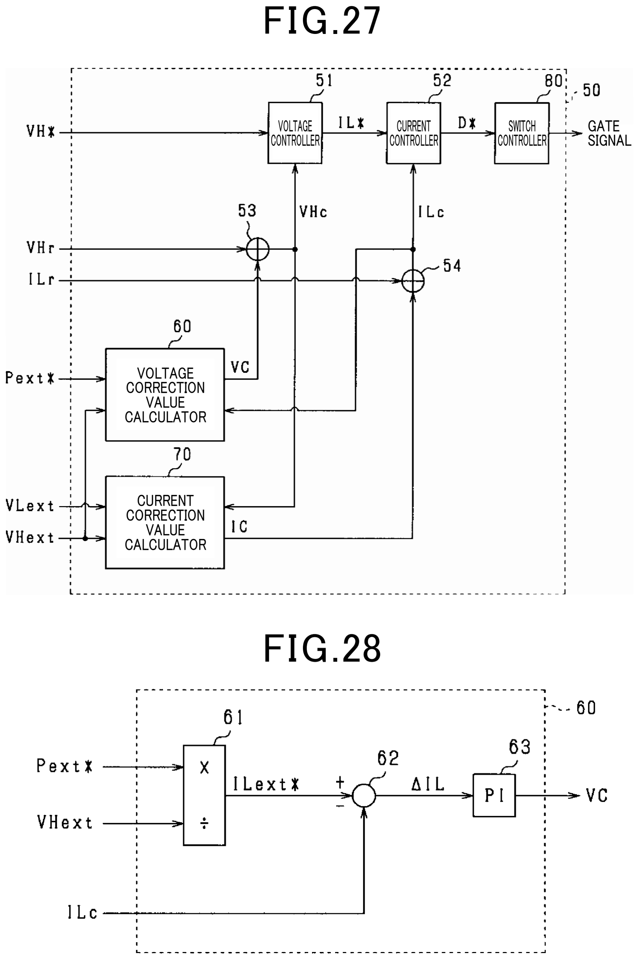

In the present embodiment, the common output voltage value VHext is to be inputted into the voltage correction value calculator 60 as illustrated in Fig. 27. The reference current calculator 61 of the voltage correction value calculator 60 calculates the reference current value ILext* by dividing the output power command value Pext* by the common output voltage value VHext in place of the common input voltage value VLext as illustrated in Fig. 28.

The present embodiment described hereinabove is able to produce an effect similar to that of the first embodiment.

<Fifth Embodiment>

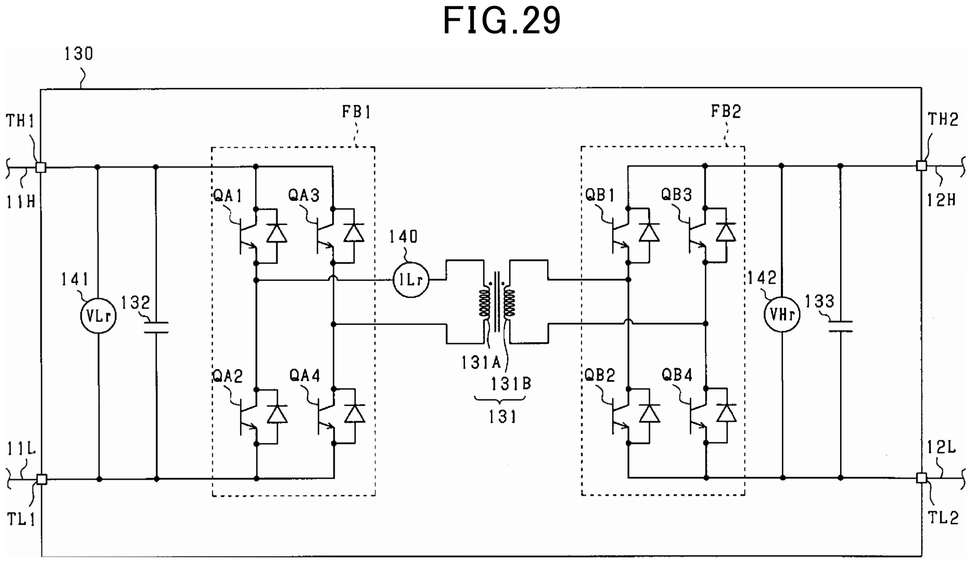

Hereinbelow, a fifth embodiment will be described with reference to the drawings with a focus on a difference from the first embodiment. The DCDC converter of the power conversion device is not limited to a non-isolated DCDC converter and may be an isolated DCDC converter including a transformer. Fig. 29 illustrates, as an example of the isolated DCDC converter, a DAB (Dual Active Bridge) based converter.

A DCDC converter of each of power conversion devices 130 includes a first full-bridge circuit FB1, a second full-bridge circuit FB2, a transformer 131 that performs power transfer between the full-bridge circuits FB1, FB2, a first capacitor 132, and a second capacitor 133. The transformer 131 includes a first coil 131A connected to the first full-bridge circuit FB1, a second coil 131B connected to the second full-bridge circuit FB2, and a core magnetic coupled to each of the coils 131A, 131B.

The first full-bridge circuit FB1 includes a first A, second A, third A, and fourth A switches QA1, QA2, QA3, and QA4. The second full-bridge circuit FB2 includes a first B, second B, third B, and fourth B switches QB1, QB2, QB3, and QB4. In the present embodiment, the switches QA1 to QA4 and QB1 to QB4 are IGBTs.

The power conversion device 130 includes a current sensor 140, a first voltage sensor 141 (corresponding to "the individual input voltage sensor"), a second voltage sensor 142 (corresponding to "the individual output voltage sensor"), and a non-illustrated ECU serving as a control device. The current sensor 140 detects, as the reactor current value ILr, a current (corresponding to "the control current value") flowing through the first coil 131A. The first voltage sensor 141 detects, as the individual input voltage value VLr, a terminal voltage of the first capacitor 132 and the second voltage sensor 142 detects, as the individual output voltage value VHr, a terminal voltage of the second capacitor 133. The detection value of each of the sensors 140 to 142 is to be inputted into the ECU.

It should be noted that a switching control method for each of the full-bridge circuits FB1, FB2 of each of the power conversion devices 130 for performing power transfer between the direct-current power supply 10 and the electrical load 20 is known as described in, for example, JP 2021-145407 A. Accordingly, the description of the switching control method is omitted.

In a case where an electric power is to be transferred in a direction from the direct-current power supply 10 toward the electrical load 20 through each of the power conversion devices 30, the first high-potential terminal TH1 corresponds to "the high-potential input terminal", the first low-potential terminal TL1 corresponds to "the low-potential input terminal", the second high-potential terminal TH2 corresponds to "the high-potential output terminal", and the second low-potential terminal TL2 corresponds to "the low-potential output terminal".

In contrast, in a case where, for example, a secondary battery is provided in place of the electrical load 20 and an electric power is to be transferred in a direction from the secondary battery toward the direct-current power supply 10 through each of the power conversion devices 130, the second high-potential terminal TH2 corresponds to "the high-potential input terminal", the second low-potential terminal TL2 corresponds to "the low-potential input terminal", the first high-potential terminal TH1 corresponds to "the high-potential output terminal", and the first low-potential terminal TL1 corresponds to "the low-potential output terminal."

In the present embodiment described hereinabove, processes as in preceding Figs. 3 to 5 and 14 to 16 are also applicable.

<Other Embodiments>

It should be noted that the above-described embodiments may be altered as follows.

- In the configuration illustrated in Fig. 29, a current sensor that detects the current flowing through the second coil 131B may be provided instead of the first coil 131A.
- The non-isolated DCDC converter is not limited to a boost DCDC converter and may be, for example, a buck DCDC converter capable of performing a buck control to step down an input voltage and output it. It may be a buck control.
- The detection value of each of the common voltage sensors 43, 44 may be directly inputted into the ECU of each of the power conversion devices not via the VCU 45.
- The switch of the DCDC converter is not limited to an IGBT and may be, for example, an N-channel MOSFET including a body diode. In this case, a high-potential terminal of the switch is a drain and a low-potential terminal of the switch is a source.

- The controller and its method described in the present disclosure may be implemented by a dedicated computer provided by a processor and memory programmed to execute one or a plurality of functions embodied by a computer program. Alternatively, the controller and its method described in the present disclosure may be implemented by a dedicated computer, which is provided by a processor including one or more dedicated hardware logic circuits. Furthermore, the controller and its method described in the present disclosure may be implemented by one or more dedicated computers including a combination of a processor and memory programmed to execute one or a plurality of functions and a processor including one or more hardware logic circuits. Additionally, the computer program may be stored in a computer-readable non-transitory tangible storage medium as instructions to be executed by a computer.

In the following, distinguishing configurations extracted from the above-described embodiments will be described.

[Configuration 1]

A parallel power supply device applied to a system, the system including:

a direct-current power supply (10); and
a supply target unit (20) of an output power from the direct-current power supply,
the parallel power supply device comprising a plurality of power conversion devices (30, 130), wherein the power conversion devices each include:

a DCDC converter including a switch (SWH, SWL, QA1 to QB4), a reactor (31, 131A, 131B), a high-potential input terminal (TH1), a low-potential input terminal (TL1), a high-potential output terminal (TH2), and a low-potential output terminal (TL2), the DCDC converter being configured to transform a direct-current voltage inputted through the high-potential input terminal and the low-potential input terminal and output the transformed voltage through the high-potential output terminal and the low-potential output terminal by repeating an accumulation of a magnetic energy in the reactor and a release of the magnetic energy from the reactor by a switching control of the switch;
an individual output voltage sensor (42, 142) configured to detect an individual output voltage value (VHr), the individual output voltage value being a voltage value between the high-potential input terminal and the low-potential input terminal;

a current sensor (40, 140) configured to detect a control current value (ILr), the control current value being either a current value flowing through the reactor or a current value flowing to the high-potential output terminal; and

a control device (50) configured to be inputted with the detected individual output voltage value and the control current value,

the system includes:

a high-potential input path (11H) that is an electric path connecting a positive terminal of the direct-current power supply and the high-potential input terminal of each of the DCDC converters;

a low-potential input path (11L) that is an electric path connecting a negative terminal of the direct-current power supply and the low-potential input terminal of each of the DCDC converters;

a high-potential output path (12H) that is an electric path connecting a high-potential terminal of the supply target unit and the high-potential output terminal of each of the DCDC converters;

a low-potential output path (12L) that is an electric path connecting a low-potential terminal of the supply target unit and the low-potential output terminal of each of the DCDC converters; and

a common output voltage sensor (44) configured to detect a common output voltage value (VHext), the common output voltage value being a voltage value between the high-potential output path and the low-potential output path,

the parallel power supply device is configured so that the detected common output voltage value, an output voltage command value (VH*) common for each of the power conversion devices, and an output power command value (Pext*) common for each of the power conversion devices are inputted into the control device of each of the power conversion devices, and

the control device of each of the power conversion devices is configured to perform the switching control of the switch based on the inputted output voltage command value, the individual output voltage value, the control current value, the output power command value and the common output voltage value.

[Configuration 2]

The parallel power supply device according to Configuration 1, in which

the system includes a common input voltage sensor (43) configured to detect a common input voltage value (VLext), the common input voltage value being a voltage value between the high-potential input path and the low-potential input path,

the parallel power supply device is configured so that the detected common input voltage value is inputted into the control device of each of the power conversion devices,

the control current value is a current value flowing through the reactor (31),

the control device of each of the power conversion devices include:

a voltage corrector (53, 60) configured to calculate a corrected output voltage value (VHc), the corrected output voltage value being a value obtained by correcting the inputted individual output voltage value;

a current corrector (54, 70) configured to calculate a corrected current value (ILc), the corrected current value being a value obtained by correcting the inputted control current value;

a voltage controller (51) configured to calculate a current command value (IL*) flowing through the reactor as an operation amount for feedback-controlling the calculated corrected output voltage value to the inputted output voltage command value;

a current controller (52) configured to calculate an operation amount (D*) for feedback-controlling the calculated corrected current value to the calculated current command value; and

a switch controller (80) configured to perform the switching control of the switch based on the operation amount calculated by the current controller,

in the control device of each of the power conversion devices, the voltage corrector is configured to calculate the corrected output voltage value based on the calculated corrected current value in addition to the inputted output power command value, the common input voltage value and the individual output voltage value, and

in the control device of each of the power conversion devices, the current corrector is configured to calculate the corrected current value based on the calculated corrected output voltage value in addition to the inputted common input voltage value, the common output voltage value and the control current value.

[Configuration 3]

The parallel power supply device according to Configuration 2, in which

in the control device of each of the power conversion devices, the voltage corrector is configured to:

calculate a reference current value (ILext) by dividing the output power command value by the common input voltage value;

calculate a voltage correction value (VC) as an operation amount for feedback-controlling the calculated corrected current value to the reference current value; and

calculate, as the corrected output voltage value, a value obtained by correcting the inputted individual output voltage value based on the voltage correction value.

[Configuration 4]

The parallel power supply device according to Configuration 1, in which

the system includes a common input voltage sensor (43) configured to detect a common input voltage value (VLext), the common input voltage value being a voltage value between the high-potential input path and the low-potential input path,

the parallel power supply device is configured so that the detected common input voltage value is inputted into the control device of each of the power conversion devices,

the control current value is a current value flowing to the high-potential output terminal,

the control device of each of the power conversion devices include:

a voltage corrector (53, 60) configured to calculate a corrected output voltage value (VHc), the corrected output voltage value being a value obtained by correcting the inputted individual output voltage value;

a current corrector (54, 70) configured to calculate a corrected current value (ILc), the corrected current value being a value obtained by correcting the inputted control current value;

a voltage controller (51) configured to calculate a current command value (IL*) flowing to the high-potential output terminal as an operation amount for feedback-controlling the calculated corrected output voltage value to the inputted output voltage command value;

a current controller (52) configured to calculate an operation amount (D*) for feedback-controlling the calculated corrected current value to the calculated current command value; and

a switch controller (80) configured to perform the switching control of the switch based on the operation amount calculated by the current controller,

in the control device of each of the power conversion devices, the voltage corrector is configured to calculate the corrected output voltage value based on the calculated corrected current value in addition to the inputted output power command value, the common output voltage value and the individual output voltage value, and

in the control device of each of the power conversion devices, the current corrector is configured to calculate the corrected current value based on the calculated corrected output voltage value in addition to the inputted common output voltage value, the common input voltage value and the control current value.

[Configuration 5]

The parallel power supply device according to Configuration 4, in which

in the control device of each of the power conversion devices, the voltage corrector is configured to:

calculate a reference current value (ILext*) by dividing the output power command value by the common output voltage value;

calculate a voltage correction value (VC) as an operation amount for feedback-controlling the calculated corrected current value to the reference current value; and

calculate, as the corrected output voltage value, a value obtained by correcting the inputted individual output voltage value based on the voltage correction value.

[Configuration 6]

The parallel power supply device according to Configuration 3 or 5, in which

in the control device of each of the power conversion devices, the voltage corrector is configured to:

in response to determining that a transform control of the DCDC converter is ongoing, calculate, as the corrected output voltage value, a value obtained by correcting the inputted individual output voltage value based on the voltage correction value; and

in response to determining that the transform control is stopped, set the inputted common output voltage value as the corrected output voltage value.

[Configuration 7]

The parallel power supply device according to Configuration 3 or 5, in which

in the control device of each of the power conversion devices, the voltage corrector is configured to:

in response to determining that a magnitude of a difference between the calculated corrected current value and the reference current value exceeds a current threshold (Ith), calculate, as the corrected output voltage value, a value obtained by correcting the inputted individual output voltage value based on the voltage correction value; and

in response to determining that the magnitude of the difference between the corrected current value and the reference current value is equal to or less than the current threshold, restrict a correction relative to the inputted individual output voltage value.

[Configuration 8]

The parallel power supply device according to any one of Configurations 2 to 7, in which
in the control device of each of the power conversion devices, the current corrector is configured to:

calculate a current correction value (IC) as an operation amount for feedback-controlling a correlation value ($\Delta$Ich) of a difference between the common output voltage value and the individual output voltage value to zero; and
calculate, as the corrected current value, a value obtained by correcting the inputted control current value based on the current correction value.

[Configuration 9]

The parallel power supply device according to Configuration 8, in which
in the control device of each of the power conversion devices, the voltage corrector is configured to:

calculate a reference current value (ILext) by dividing the output power command value by the common input voltage value; and
calculate a voltage correction value (VC) as an operation amount for feedback-controlling the calculated corrected current value to the reference current value, and
in the control device of each of the power conversion devices, the current corrector is configured to:

in response to determining that a transform control of the DCDC converter is ongoing, calculate, as the corrected current value, a value obtained by correcting the inputted control current value based on the current correction value; and
in response to determining that the transform control is stopped, set the calculated reference current value as the corrected current value.

[Configuration 10]

The parallel power supply device according to Configuration 8 or 9, in which
in the control device of each of the power conversion devices, the current corrector is configured to:

in response to determining that a calculated magnitude of the correlation value exceeds a threshold (I$\alpha$), calculate, as the corrected current value, a value obtained by correcting the inputted control current value based on the current correction value; and
in response to the magnitude of the correlation value is equal to or less than the threshold, restrict a correction relative to the inputted control current value.

[Configuration 11]

The parallel power supply device according to Configuration 8 or 9, in which

the parallel power supply device is configured so that the output voltage command value gradually increases toward a specified voltage (Vp) after a start of a transform control of the DCDC converter, and
in the control device of each of the power conversion devices, the current corrector is configured to:

in response to determining that a predetermined time (Tth) has elapsed since a timing when the output voltage command value reaches a determination voltage (V$\alpha$) which is lower than the specified voltage after the inputted output voltage command value starts to gradually increase, calculate, as the corrected current value, a value obtained by correcting the inputted control current value based on the current correction value; and
in response to determining that the predetermined time has not elapsed since the timing after the inputted output voltage command value starts to gradually increase, restrict a correction relative to the inputted control current value.

[Configuration 12]

A program applied to a system, the system including:

a direct-current power supply (10);
a supply target unit (20) of an output power from the direct-current power supply; and
a plurality of power conversion devices (30, 130), wherein
the power conversion devices each include:

a DCDC converter including a switch (SWH, SWL, QA1 to QB4), a reactor (31, 131A, 131B), a high-potential input terminal (TH1), a low-potential input terminal (TL1), a high-potential output terminal (TH2), and a low-potential output terminal (TL2), the DCDC converter being configured to transform a direct-current voltage inputted through the high-potential input terminal and the low-potential input terminal and output the transformed voltage through the high-potential output terminal and the low-potential output terminal by repeating an accumulation of a magnetic energy in the reactor and a release of the magnetic energy from the reactor by a switching control of the switch;
an individual output voltage sensor (33, 133) configured to detect an individual output voltage value (VHr), the individual output voltage value being a voltage value between the high-potential input terminal and the low-potential input terminal;
a current sensor (40, 140) configured to detect a control current value (ILr), the control current value being either a current value flowing through the reactor or a current value flowing to the high-potential output terminal; and
a control device (50) configured to be inputted with the detected individual output voltage value and the control current value,
the system includes:

   a high-potential input path (11H) that is an electric path connecting a positive terminal of the direct-current power supply and the high-potential input terminal of each of the DCDC converters;
   a low-potential input path (11L) that is an electric path connecting a negative terminal of the direct-current power supply and the low-potential input terminal of each of the DCDC converters;
   a high-potential output path (12H) that is an electric path connecting a high-potential terminal of the supply target unit and the high-potential output terminal of each of the DCDC converters;
   a low-potential output path (12L) that is an electric path connecting a low-potential terminal of the supply target unit and the low-potential output terminal of each of the DCDC converters; and
   a common output voltage sensor (44) configured to detect a common output voltage value (VHext), the common output voltage value being a voltage value between the high-potential output path and the low-potential output path,
   the system is configured so that the detected common output voltage value, an output voltage command value (VH*) common for each of the power conversion devices, and an output power command value (Pext*) common for each of the power conversion devices are inputted into the control device of each of the power conversion devices, and
the program causes the control device of each of the power conversion devices to perform the switching control of the switch based on the inputted output voltage command value, the individual output voltage value, the control current value, the output power command value and the common output voltage value.

Although the present disclosure has been described in reference to the embodiments, it should be understood that the present disclosure is not limited to the embodiments and structures. The present disclosure also encompasses various modification examples and modifications within the equivalent range. In addition, various combinations and forms, as well as other combinations and forms including only one element, more or less, are within the scope and spirit of the present disclosure.

**Claims**

1. A parallel power supply device applied to a system, the system including:

   a direct-current power supply (10); and
   a supply target unit (20) of an output power from the direct-current power supply,
   the parallel power supply device comprising a plurality of power conversion devices (30, 130), wherein
   the power conversion devices each include:

      a DCDC converter including a switch (SWH, SWL, QA1 to QB4), a reactor (31, 131A, 131B), a high-potential input terminal (TH1), a low-potential input terminal (TL1), a high-potential output terminal (TH2), and a low-potential output terminal (TL2), the DCDC converter being configured to transform a direct-current voltage inputted through the high-potential input terminal and the low-potential input terminal and output the transformed voltage through the high-potential output terminal and the low-potential output terminal by repeating an accumulation of a magnetic energy in the reactor and a release of the magnetic energy from the reactor by a switching control of the switch;
      an individual output voltage sensor (42, 142) configured to detect an individual output voltage value (VHr), the individual output voltage value being a voltage value between the high-potential input terminal and the low-potential input terminal;

a current sensor (40, 140) configured to detect a control current value (ILr), the control current value being either a current value flowing through the reactor or a current value flowing to the high-potential output terminal; and
a control device (50) configured to be inputted with the detected individual output voltage value and the control current value, the system includes:

a high-potential input path (11H) that is an electric path connecting a positive terminal of the direct-current power supply and the high-potential input terminal of each of the DCDC converters;
a low-potential input path (11L) that is an electric path connecting a negative terminal of the direct-current power supply and the low-potential input terminal of each of the DCDC converters;
a high-potential output path (12H) that is an electric path connecting a high-potential terminal of the supply target unit and the high-potential output terminal of each of the DCDC converters;
a low-potential output path (12L) that is an electric path connecting a low-potential terminal of the supply target unit and the low-potential output terminal of each of the DCDC converters; and
a common output voltage sensor (44) configured to detect a common output voltage value (VHext), the common output voltage value being a voltage value between the high-potential output path and the low-potential output path,
the parallel power supply device is configured so that the detected common output voltage value, an output voltage command value (VH*) common for each of the power conversion devices, and an output power command value (Pext*) common for each of the power conversion devices are inputted into the control device of each of the power conversion devices, and
the control device of each of the power conversion devices is configured to perform the switching control of the switch based on the inputted output voltage command value, the individual output voltage value, the control current value, the output power command value and the common output voltage value.

2. The parallel power supply device according to claim 1, wherein

the system includes a common input voltage sensor (43) configured to detect a common input voltage value (VLext), the common input voltage value being a voltage value between the high-potential input path and the low-potential input path,
the parallel power supply device is configured so that the detected common input voltage value is inputted into the control device of each of the power conversion devices,
the control current value is a current value flowing through the reactor (31),
the control device of each of the power conversion devices include:

a voltage corrector (53, 60) configured to calculate a corrected output voltage value (VHc), the corrected output voltage value being a value obtained by correcting the inputted individual output voltage value;
a current corrector (54, 70) configured to calculate a corrected current value (ILc), the corrected current value being a value obtained by correcting the inputted control current value;
a voltage controller (51) configured to calculate a current command value (IL*) flowing through the reactor as an operation amount for feedback-controlling the calculated corrected output voltage value to the inputted output voltage command value;
a current controller (52) configured to calculate an operation amount (D*) for feedback-controlling the calculated corrected current value to the calculated current command value; and
a switch controller (80) configured to perform the switching control of the switch based on the operation amount calculated by the current controller,
in the control device of each of the power conversion devices, the voltage corrector is configured to calculate the corrected output voltage value based on the calculated corrected current value in addition to the inputted output power command value, the common input voltage value and the individual output voltage value, and
in the control device of each of the power conversion devices, the current corrector is configured to calculate the corrected current value based on the calculated corrected output voltage value in addition to the inputted common input voltage value, the common output voltage value and the control current value.

3. The parallel power supply device according to claim 2, wherein
in the control device of each of the power conversion devices, the voltage corrector is configured to:

calculate a reference current value (ILext) by dividing the output power command value by the common input voltage value;
calculate a voltage correction value (VC) as an operation amount for feedback-controlling the calculated corrected current value to the reference current value; and
calculate, as the corrected output voltage value, a value obtained by correcting the inputted individual output voltage value based on the voltage correction value.

4. The parallel power supply device according to claim 1, wherein

the system includes a common input voltage sensor (43) configured to detect a common input voltage value (VLext), the common input voltage value being a voltage value between the high-potential input path and the low-potential input path,
the parallel power supply device is configured so that the detected common input voltage value is inputted into the control device of each of the power conversion devices,
the control current value is a current value flowing to the high-potential output terminal,
the control device of each of the power conversion devices include:

a voltage corrector (53, 60) configured to calculate a corrected output voltage value (VHc), the corrected output voltage value being a value obtained by correcting the inputted individual output voltage value;
a current corrector (54, 70) configured to calculate a corrected current value (ILc), the corrected current value being a value obtained by correcting the inputted control current value;
a voltage controller (51) configured to calculate a current command value (IL*) flowing to the high-potential output terminal as an operation amount for feedback-controlling the calculated corrected output voltage value to the inputted output voltage command value;
a current controller (52) configured to calculate an operation amount (D*) for feedback-controlling the calculated corrected current value to the calculated current command value; and
a switch controller (80) configured to perform the switching control of the switch based on the operation amount calculated by the current controller,
in the control device of each of the power conversion devices, the voltage corrector is configured to calculate the corrected output voltage value based on the calculated corrected current value in addition to the inputted output power command value, the common output voltage value and the individual output voltage value, and
in the control device of each of the power conversion devices, the current corrector is configured to calculate the corrected current value based on the calculated corrected output voltage value in addition to the inputted common output voltage value, the common input voltage value and the control current value.

5. The parallel power supply device according to claim 4, wherein
in the control device of each of the power conversion devices, the voltage corrector is configured to:

calculate a reference current value (ILext*) by dividing the output power command value by the common output voltage value;
calculate a voltage correction value (VC) as an operation amount for feedback-controlling the calculated corrected current value to the reference current value; and
calculate, as the corrected output voltage value, a value obtained by correcting the inputted individual output voltage value based on the voltage correction value.

6. The parallel power supply device according to claim 3 or 5, wherein
in the control device of each of the power conversion devices, the voltage corrector is configured to:

in response to determining that a transform control of the DCDC converter is ongoing, calculate, as the corrected output voltage value, a value obtained by correcting the inputted individual output voltage value based on the voltage correction value; and
in response to determining that the transform control is stopped, set the inputted common output voltage value as the corrected output voltage value.

7. The parallel power supply device according to claim 3 or 5, wherein
in the control device of each of the power conversion devices, the voltage corrector is configured to:

in response to determining that a magnitude of a difference between the calculated corrected current value and the reference current value exceeds a current threshold (Ith), calculate, as the corrected output voltage value, a value obtained by correcting the inputted individual output voltage value based on the voltage correction value; and

in response to determining that the magnitude of the difference between the corrected current value and the reference current value is equal to or less than the current threshold, restrict a correction relative to the inputted individual output voltage value.

8. The parallel power supply device according to any one of claims 2 to 5, wherein in the control device of each of the power conversion devices, the current corrector is configured to:

calculate a current correction value (IC) as an operation amount for feedback-controlling a correlation value ($\Delta$Ich) of a difference between the common output voltage value and the individual output voltage value to zero; and

calculate, as the corrected current value, a value obtained by correcting the inputted control current value based on the current correction value.

9. The parallel power supply device according to claim 8, wherein in the control device of each of the power conversion devices, the voltage corrector is configured to:

calculate a reference current value (ILext) by dividing the output power command value by the common input voltage value; and

calculate a voltage correction value (VC) as an operation amount for feedback-controlling the calculated corrected current value to the reference current value, and

in the control device of each of the power conversion devices, the current corrector is configured to:

in response to determining that a transform control of the DCDC converter is ongoing, calculate, as the corrected current value, a value obtained by correcting the inputted control current value based on the current correction value; and

in response to determining that the transform control is stopped, set the calculated reference current value as the corrected current value.

10. The parallel power supply device according to claim 8, wherein in the control device of each of the power conversion devices, the current corrector is configured to:

in response to determining that a calculated magnitude of the correlation value exceeds a threshold (I$\alpha$), calculate, as the corrected current value, a value obtained by correcting the inputted control current value based on the current correction value; and

in response to the magnitude of the correlation value is equal to or less than the threshold, restrict a correction relative to the inputted control current value.

11. The parallel power supply device according to claim 8, wherein

the parallel power supply device is configured so that the output voltage command value gradually increases toward a specified voltage (Vp) after a start of a transform control of the DCDC converter, and

in the control device of each of the power conversion devices, the current corrector is configured to:

in response to determining that a predetermined time (Tth) has elapsed since a timing when the output voltage command value reaches a determination voltage (V$\alpha$) which is lower than the specified voltage after the inputted output voltage command value starts to gradually increase, calculate, as the corrected current value, a value obtained by correcting the inputted control current value based on the current correction value; and

in response to determining that the predetermined time has not elapsed since the timing after the inputted output voltage command value starts to gradually increase, restrict a correction relative to the inputted control current value.

12. A program applied to a system, the system including:

a direct-current power supply (10);

a supply target unit (20) of an output power from the direct-current power supply; and

a plurality of power conversion devices (30, 130), wherein

the power conversion devices each include:

a DCDC converter including a switch (SWH, SWL, QA1 to QB4), a reactor (31, 131A, 131B), a high-potential input terminal (TH1), a low-potential input terminal (TL1), a high-potential output terminal (TH2), and a low-potential output terminal (TL2), the DCDC converter being configured to transform a direct-current voltage inputted through the high-potential input terminal and the low-potential input terminal and output the transformed voltage through the high-potential output terminal and the low-potential output terminal by repeating an accumulation of a magnetic energy in the reactor and a release of the magnetic energy from the reactor by a switching control of the switch;

an individual output voltage sensor (33, 133) configured to detect an individual output voltage value (VHr), the individual output voltage value being a voltage value between the high-potential input terminal and the low-potential input terminal;

a current sensor (40, 140) configured to detect a control current value (ILr), the control current value being either a current value flowing through the reactor or a current value flowing to the high-potential output terminal; and

a control device (50) configured to be inputted with the detected individual output voltage value and the control current value, the system includes:

a high-potential input path (11H) that is an electric path connecting a positive terminal of the direct-current power supply and the high-potential input terminal of each of the DCDC converters;

a low-potential input path (11L) that is an electric path connecting a negative terminal of the direct-current power supply and the low-potential input terminal of each of the DCDC converters;

a high-potential output path (12H) that is an electric path connecting a high-potential terminal of the supply target unit and the high-potential output terminal of each of the DCDC converters;

a low-potential output path (12L) that is an electric path connecting a low-potential terminal of the supply target unit and the low-potential output terminal of each of the DCDC converters; and

a common output voltage sensor (44) configured to detect a common output voltage value (VHext), the common output voltage value being a voltage value between the high-potential output path and the low-potential output path,

the system is configured so that the detected common output voltage value, an output voltage command value (VH*) common for each of the power conversion devices, and an output power command value (Pext*) common for each of the power conversion devices are inputted into the control device of each of the power conversion devices, and

the program causes the control device of each of the power conversion devices to perform the switching control of the switch based on the inputted output voltage command value, the individual output voltage value, the control current value, the output power command value and the common output voltage value.

# FIG.1

# FIG.2

# FIG.3

# FIG.4

# FIG.5

# FIG.6

# FIG.7

## FIG.8

$\Delta Vs(=VHext-VHr)$

$0$

$\Delta Is(=ILext*-ILc)$

## FIG.9

$VC$

$0$

$\Delta Is(=ILext*-ILc)$

# FIG.10

# FIG.11

# FIG.12

$\Delta \mathrm{I} s(=\mathrm{I}\,\mathrm{L}\,\mathrm{e}\,\mathrm{x}\,\mathrm{t}\,\divideontimes-\mathrm{I}\,\mathrm{L}\,\mathrm{r})$

0

$\Delta \mathrm{V} s(=\mathrm{V}\,\mathrm{H}\,\mathrm{e}\,\mathrm{x}\,\mathrm{t}-\mathrm{V}\,\mathrm{H}\,\mathrm{c})$

# FIG.13

IC

0

$\Delta \mathrm{V} s(=\mathrm{V}\,\mathrm{H}\,\mathrm{e}\,\mathrm{x}\,\mathrm{t}-\mathrm{V}\,\mathrm{H}\,\mathrm{c})$

26

# FIG.14

VC CALCULATION PROCESS

ACQUIRE VLext, VHext, Pext∗, AND VH∗ — S10

ACQUIRE ILr, VLr, AND VHr — S11

VC CALCULATION PROCESS — S12

$VHc = VHr + VC$ — S13

CALCULATE IL∗ BASED ON VH∗ AND VHc — S14

IC CALCULATION PROCESS — S15

$ILc = ILr + IC$ — S16

CALCULATE D∗ BASED ON IL∗ AND ILc — S17

SW CONTROL BASED ON D∗ — S18

END

# FIG.15

VC CALCULATION PROCESS

CALCULATE ILext* BASED ON Pext* AND VLext — S20

CALCULATE VC BASED ON ILext* AND ILc — S21

RETURN

# FIG.16

IC CALCULATION PROCESS

CALCULATE $\Delta$Ich BASED ON VHext, VHc, AND VLext — S30

CALCULATE IC BASED ON $\Delta$Ich — S31

RETURN

# FIG.17

# FIG.18

# FIG.19

# FIG.20

# FIG.21

# FIG.22

# FIG.23

70

VLext

71    73    74    75    77

VHext → X² → (73) ΔVch → $\dfrac{Ch \times fc}{2 \times VLext}$ → ΔIch → PI → ○ → IC

72

VHc → X²

0

BOOST
or
STOP

# FIG.24

ΔIch

Iα

0 ──────────────────────→ time

−Iα

|← PERMITTED PERIOD →|← RESTRICTED PERIOD →|

# FIG.25

# FIG.26

# FIG.27

# FIG.28

# FIG.29

## INTERNATIONAL SEARCH REPORT

| International application No. |
|---|
| **PCT/JP2023/042760** |

**A. CLASSIFICATION OF SUBJECT MATTER**

***H02M 3/155***(2006.01)i
FI: H02M3/155 W

According to International Patent Classification (IPC) or to both national classification and IPC

**B. FIELDS SEARCHED**

Minimum documentation searched (classification system followed by classification symbols)

H02M3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-176606 A (SANKEN ELECTRIC CO., LTD.) 10 October 2019 (2019-10-10) entire text, all drawings | 1-12 |
| A | WO 2021/214851 A1 (MITSUBISHI ELECTRIC CORPORATION) 28 October 2021 (2021-10-28) entire text, all drawings | 1-12 |
| A | JP 2019-118213 A (PANASONIC INTELLECTUAL PROPERTY MANAGEMENT CO., LTD.) 18 July 2019 (2019-07-18) entire text, all drawings | 1-12 |
| A | JP 2012-065534 A (IHI CORP.) 29 March 2012 (2012-03-29) entire text, all drawings | 1-12 |
| A | JP 2020-123427 A (TOYOTA JIDOSHA KABUSHIKI KAISHA) 13 August 2020 (2020-08-13) entire text, all drawings | 1-12 |

✓ Further documents are listed in the continuation of Box C.  ✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 February 2024** | **20 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2023/042760**

| C. | DOCUMENTS CONSIDERED TO BE RELEVANT | |
|---|---|---|
| Category* | Citation of document, with indication, where appropriate, of the relevant passages | Relevant to claim No. |
| A | JP 2016-063744 A (TAIDA ELECTRONIC IND. CO., LTD.) 25 April 2016 (2016-04-25)<br>entire text, all drawings | 1-12 |

Form PCT/ISA/210 (second sheet) (July 2022)

**INTERNATIONAL SEARCH REPORT**
Information on patent family members

International application No.

**PCT/JP2023/042760**

| Patent document cited in search report | | | Publication date (day/month/year) | Patent family member(s) | | | Publication date (day/month/year) |
|---|---|---|---|---|---|---|---|
| JP | 2019-176606 | A | 10 October 2019 | JP | 2022-31962 | A | |
| WO | 2021/214851 | A1 | 28 October 2021 | US | 2023/0072540 | A1 | |
| | | | | entire text, all drawings | | | |
| | | | | EP | 4142132 | A1 | |
| JP | 2019-118213 | A | 18 July 2019 | (Family: none) | | | |
| JP | 2012-065534 | A | 29 March 2012 | (Family: none) | | | |
| JP | 2020-123427 | A | 13 August 2020 | (Family: none) | | | |
| JP | 2016-063744 | A | 25 April 2016 | US | 2016/0079881 | A1 | |
| | | | | entire text, all drawings | | | |
| | | | | US | 2016/0079859 | A1 | |
| | | | | EP | 2999109 | A1 | |
| | | | | CN | 105429483 | A | |

Form PCT/ISA/210 (patent family annex) (July 2022)

**EP 4 645 663 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022210645 A
- JP 6323635 B

- JP 2021145407 A